# EUROPÄISCHE PATENTANMELDUNG

(11) **EP 0 554 639 A1**
(43) Veröffentlichungstag der Anmeldung: **11.08.1993**
(21) Anmeldenummer: 92810088.2
(22) Anmeldetag: 06.02.1992
(51) Int. Cl.: G03B 27/46, G03B 27/62, G03D 15/00

(54) **Verfahren zur Erstellung fotografischer Kopien von fotografischen Kopiervorlagen in einem fotografischen Kopiergerät**

(71) Anmelder: GRETAG IMAGING AG, CH-8105 Regensdorf (CH)
(72) Erfinder: Frick, Beat, Dr., CH-8107 Buchs (CH)
(74) Vertreter: Kleewein, Walter, Dr.

(57) **Zusammenfassung**

Bei einem Verfahren zur Erstellung fotografischer Kopien von fotografischen Kopiervorlagen in einem fotografischen Kopiergerät wird zunächst in einer Messstation des fotografischen Kopiergerätes ein belichtetes fotografisches Vorlagenmaterial, auf welches fotografische Kopiervorlagen aufbelichtet sind, Vorlage für Vorlage analysiert. Dabei werden die für die Belichtung jeder Vorlage erforderlichen Messdaten bestimmt, das Format und die Lage des Zentrums jeder Kopiervorlage auf dem Film bestimmt. Jeder Vorlage wird eine Nummer eindeutig zugeordnet, welche mit Hilfe eines einzigen in der Messstation angeordneten Strichcode-Detektors durch das Abtasten eines im Randbereich des Vorlagenmaterials in periodischen Abständen vorgesehenen erweiterten DX Codes festgestellt wird. Die Nummer wird dabei beim Lesen des erweiterten DX Codes ermittelt. Die den Kopiervorlagen zugeordneten Nummern und die jeweils zugehörigen Messdaten werden an eine Rechen- und Steuereinheit weitergeleitet. Sodann werden in einer Belichtungsstation, die in Transportrichtung des Vorlagenmaterials nach der Messstation angeordnet ist, die Kopiervorlagen gemäss den in der Rechen- und Steuereinheit vorliegenden, zu der jeweiligen Kopiervorlagennummer gehörigen Messdaten zur Erstellung der fotografischen Kopien auf fotografisches Kopiermaterial aufbelichtet. Die jeder Kopiervorlage zugeordnete Nummer wird vorzugsweise auf die Rückseite der zugehörigen fotografische Kopie aufgebracht.

## Beschreibung

Die Erfindung betrifft ein Verfahren zur Erstellung fotografischer Kopien von fotografischen Kopiervorlagen in einem fotografischen Kopiergerät gemäss Oberbegriff des Patentanspruchs 1.

Die in einem fotografischen Kopiergerät auf fotografisches Kopiermaterial, in der Regel auf fotografisches Positivpapier, belichteten fotografischen Kopiervorlagen, üblicherweise belichtetes Negativfilmmaterial, werden zusammen an den Auftraggeber ausgehändigt. Nachbestellungen erfolgen meist anhand der vohandenen Positivbilder. Dabei ist es üblicherweise erforderlich, dass der Auftraggeber anhand der Positivbilder das zugehörige Negativ ermittelt und dieses dem Fotolabor mitteilt. Die Negativfilme liegen zu diesem Zeitpunkt meist in Streifen zu jeweils vier bis sechs Negativvorlagen vor. Um die Zuordnung der Positivbilder zu den Negativvorlagen zu erleichtern, sind vom Negativfilmhersteller auf dem Negativfilmstreifen in regelmässigen Abständen fortlaufende Nummern vorgesehen, die bei der Entwicklung des belichteten Negativfilms sichtbar werden und der jeweiligen Negativvorlage zugeordnet werden können. Da aber bei der Belichtung des Negativfilms dieser in jeder fotografischen Kamera unterschiedlich gleichmässig transportiert wird, ist im allgemeinen die relative Lage der Negativvorlagen zu den bereits bei der Filmherstellung angebrachten Nummern nicht korreliert. Aus diesem Grund ist es für den Auftraggeber oft sehr schwer, dem jeweiligen gesuchten Negativ auf dem Negativfilmstreifen die richtige Nummer zuzuordnen. Wenn sich der Auftraggeber in derartigen Fällen für die Zuordnung einer bestimmten Nummer zu einem Negativ entschieden hat, kann es insbesondere bei einer automatischen Abarbeitung des Auftrages vorkommen, dass in einzelnen Fällen Kopien von anderen Negativen als den bestellten (beispielsweise das vorhergehende oder das nachfolgende Negativ) für die Ausführung der Nachbestellung herangezogen wird. Um diese Fehler zu vermeiden ist es bislang oftmals nötig, dass das Bedienungspersonal des Fotolabors entweder mit dem Kunden zusammen oder alleine entscheidet, welche Negative nun eigentlich die richtigen sind. Dieser Zustand ist für beide Teile unbefriedigend und überdies sehr arbeits- und personalintensiv.

Oft ist die relative Lage der Negativvorlagen zu den Nummern auf den Negativfilmstreifen derart, dass selbst erfahrenes Bedienungspersonal in den Fotolabors grosse Probleme hat, eine eindeutige Zuordnung zu treffen. Aus diesem Grund werden in der EP-A-0,293,887 ein Verfahren und eine Vorrichtung vorgeschlagen, welche diesem Umstand Abhilfe schaffen sollen. Bei dem beschriebenen Verfahren werden Filme verwendet, bei denen die Nummern zusätzlich als Strichcode dargestellt und zwischen den Perforationslöchern und dem äusseren Rand des Negativfilmes angebracht sind. Dieser Strichcode ist zusätzlich zu dem sogenannten DX Code vorgesehen, welcher ebenfalls einen Strichcode darstellt und Informationen über den Hersteller, den Filmtyp sowie die Herstellungs-Chargennummer enthält. Dieser DX Code ist an dem dem Strichcode gegenüberliegenden Rand des Negativfilmes vorgesehen. In der Messstation eines fotografischen Kopiergerätes wird mit Hilfe eines zusätzlich zu dem Detektor für den DX Code vorgesehenen zweiten Detektors die im Strichcode codierte Nummer gelesen und zusammen mit weiteren Informationen über das zugehörige Negativ beispielsweise in einen Lochstreifen eingestanzt. In der Belichtungsstation ist ein weiterer Detektor für die Strichcodes vorgesehen, um die codierten erneut zu Nummern zu lesen. Synchron dazu wird auch die auf dem Lochstreifen enthaltene Information gelesen und verarbeitet. Durch Vergleich der in der Belichtungsstation detektierten Negativnummer mit den auf dem Lochstreifen enthaltenen Informationen werden der jeweiligen Negativvorlage die richtigen Belichtungsdaten zugeordnet. Mit Hilfe dieser Daten wird die Negativvorlage zur Erstellung eines Positivbildes auf Positivpapier kopiert. Zusätzlich wird auch die dem Negativ in der Messstation zugeordnete Nummer auf die Rückseite des Papierbildes aufgedruckt. Dieses Verfahren soll sowohl für Vollformatbilder alsauch für Halbformatbilder geeignet sein. In der Druckschrift ist ausgeführt, dass es im Falle von Halbformatbildern erforderlich sein kann, zwei benachbarte Nummern auf das Papierbild zu drucken, um eine eindeutige Zuordnung zu gewährleisten.

Das beschriebene Verfahren und die zugehörige Vorrichtung sind auf die zuvor erwähnten speziellen Negativfilmmaterialien optimiert, bei denen die Nummern als zusätzliche Strichcodes dargestellt werden, die am dem DX Code gegenüberliegenden Filmrand angeordnet sind.

Andererseits besteht aber der Wunsch nach Negativfilmmaterialien, bei denen ein Filmrand frei von codierten Informationen ist. Es kann wünschenswert sein, dort Informationen über das Negativfilmmaterial vorzusehen, die ohne weitere Hilfsmittel für das Bedienungspersonal lesbar sind, sodass der Negativfilm auch in fotografischen Kopiergeräten ohne DX Code Detektoren richtig verarbeitet werden kann. Aus diesem Grund ist vorgeschlagen worden, auf dem Negativfilmmaterial einen sogenannten erweiterten DX Code anzubringen. Dieser erweiterte DX Code enthält neben den codierten Informationen des bisherigen DX Codes auch noch jeweils eine codierte Nummer und ist wie bisher am unteren Filmrand vorgesehen. Auf diese Weise kann auf zusätzliche Strichcodes verzichtet werden, und der obere Filmrand bleibt wunschgemäss frei für eine andere Nutzung.

Es besteht daher die Aufgabe, ein Verfahren zur Erstellung fotografischer Kopien von fotografischen Kopiervorlagen in einem fotografischen Kopiergerät zu schaffen, welches es erlaubt, mit dem neuartigen Negativfilmmaterial und dem erweiterten DX Code zu arbeiten. Darüber hinaus soll sowohl bei Vollformatbildern alsauch bei Halbformatbildern eine eindeutige Zuordnung von Vorlage und Kopie durch die Angabe einer einzigen Nummer ermöglicht werden. Das Verfahren soll möglichst einfach und automatisiert durchführbar sein. Ein mehrfaches Detektieren der codierten Informationen in den einzelnen Bearbeitungsstationen soll entfallen. Die zugehörige Vorrichtung soll einfach im Aufbau sein und keine zusätzlichen Detektoren erfordern. Es soll ein Verfahren geschaffen werden, welches es für den Auftraggeber erleichtern, die korrekte zu der gewünschten Nachbestellung gehörige Kopiervorlage zu bestimmen. Zudem soll ein Verfahren geschaffen werden, nach dem Nachbestellungsaufträge des Kunden zuverlässig abgearbeitet werden kännen.

Die Behebung all der geschilderten Nachteile des Standes der Technik sowie die Lösung der gestellten und noch weiterer Aufgaben erfolgt durch ein Verfahren gemäss Kennzeichen des Patentanspruchs 1. Besonders bevorzugte Verfahrensvarianten sind Gegenstand der abhängigen Verfahrensansprüche.

Im folgenden wird die Erfindung mit allen ihr als wesentlich erscheinenden Einzelheiten anhand der Zeichnungen noch näher erläutert.

Es zeigen in schematischer Darstellung:
- Fig. 1: ein Beispiel eines sogenannten erweiterten DX Codes,
- Fig. 2: ein fotografisches Kopiergerät,
- Fig. 3: ein Vorlagenmaterial mit vollformatigen Kopiervorlagen in der Messstation eines fotografischen Kopiergerätes,
- Fig. 4: ein Vorlagenmaterial mit halbformatigen Kopiervorlagen in der Messstation eines fotografischen Kopiergerätes,
- Fig. 5: ein Diagramm zur Erläuterung des Verfahrens beim Erstdurchlauf vollformatiger Kopiervorlagen,
- Fig. 6: ein Diagramm zur Erläuterung des Verfahrens beim Erstdurchlauf halbformatiger Kopiervorlagen,
- Fig. 7: ein Diagramm zur Erläuterung des Verfahrens bei Nachbestellaufträgen von vollformatigen Kopiervorlagen und
- Fig. 8: ein Diagramm zur Erläuterung des Verfahrens bei Nachbestellaufträgen von halbformatigen Kopiervorlagen.

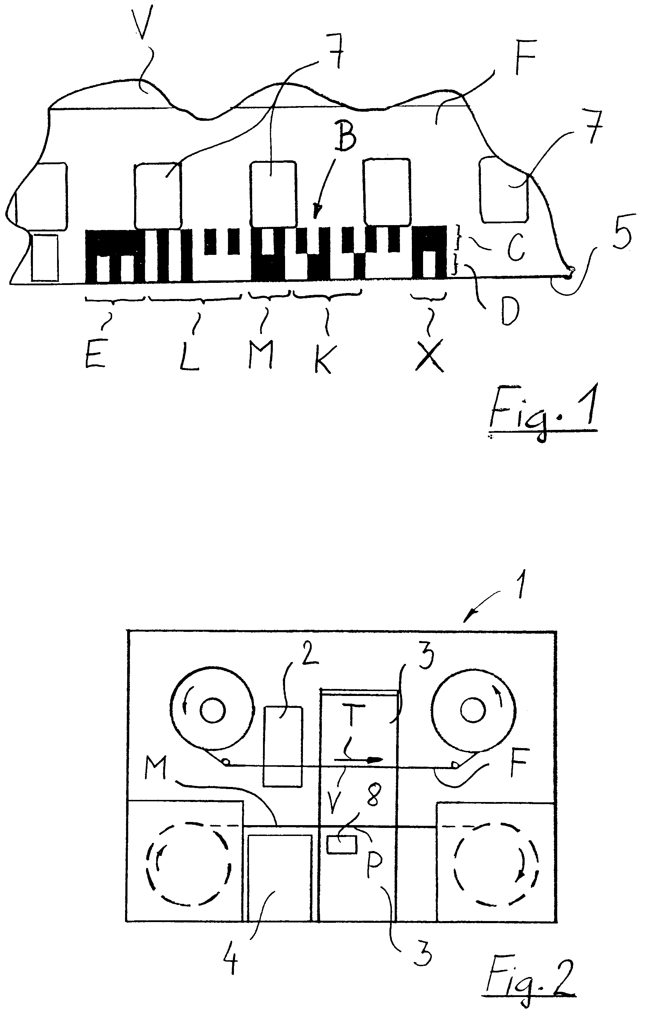

In Fig. 1 ist ein Beispiel eines sogenannten erweiterten DX Codes dargestellt. Der erweiterte DX Code B ist, wie dargestellt, üblicherweise zwischen den Perforationslöchern 7 und der unteren Längskante 5 des Vorlagenmaterials F angeordnet. Bei dem Vorlagenmaterial F handelt es sich üblicherweise um konfektionierten Negativfilm, beispielsweise um Farbfilm des Formats 135 mm, es kann sich aber auch um Diapositivfilm desselben Formats handeln. Es können aber auch andere Filmformate mit einem derartigen erweiterten DX Code B versehen sein. Der Bereich zwischen den Perforationslöchern 7 und der oberen Längskante 6 des Filmes F wird üblicherweise freigehalten oder trägt analoge Informationen in Form von alphnumerischen Zeichen für das Bedienungspersonal in Fotolabors. Der erweiterte DX Code B ist ein Strichcode, der zwei in Längsrichtung des Filmes F übereinander angeordnete Teile umfasst. Der unmittelbar an den unteren Längsrand 5 des Filmes F angrenzende Teil ist der Datenteil D während der darüber angeordnete an die Perforationslöcher 7 angrenzende Teil C ein bitmuster zur Synchronisierung einer Strichcode-Leseeinrichtung trägt.

Der Datenteil D des erweiterten DX Codes B entspricht in seinem grundsätzlichen Aufbau weitgehend dem bekannten DX Code. Insbesondere wird der Code von einer Eingangssequenz E und von einer Ausgangssequenz X begrenzt. Zwischen der Eingangssequenz E und der Ausgangssequenz X ist die eigentliche erweiterte Information angeordnet. Diese umfasst in der Reihenfolge ihrer Anordnung nach der Eingangssequenz E einen Bereich L, in dem Informationen über die Filmart und die Filmempfindlichkeit codiert sind, einen Abschnitt M, in dem der Filmhersteller und ggf. die Chargennummer, aus der der Film stammt, spezifiziert sind, und eine Sequenz, in der eine Nummer K codiert ist. Diese Nummer K entspricht der analogen Zahl A, die vom Hersteller in Transportrichtung T des Filmes gesehen in einem normierten Abstand vor dem erweiterten DX Code B auf dem unteren Filmrand 5 vorgesehen ist. Diese analogen Zahlen liegen bei einem Film des 135-er Formates als Haupt- und als Nebennummern H und N vor, die beginnend mit einer Hauptnummer H abwechselnd in einem Abstand von 19,5 mm auf dem Film F angeordnet sind. Als Hauptnummern H werden die fortlaufenden Zahlen 0, 1, 2, usw. bezeichnet, als Nebennummern N beispielsweise die zugehörigen Zahlen 0A, 1A, 2A usf.

In Fig. 2 ist ein fotografisches Kopiergerät 1 zur erfindungsgemässen Verarbeitung von Vorlagenmaterialien F mit erweitertem DX Code B dargestellt. Das fotografische Kopiergerät, vorzugsweise ein fotografisches Farbkopiergerät, umfasst im wesentlichen eine Messstation 2 und eine Belichtungsstation 3, die in Transportrichtung T nacheinander vom belichteten und entwickelten Vorlagenmaterial F, beispielsweise dem 135-er Farbfilm, durchlaufen werden. In der Messstation 2 werden die auf dem Film F befindlichen Kopiervorlagen V, die Negativbilder, unter anderem bezüglich ihrer farblichen und ihrer dichtemässigen Zusammensetzung analysiert und die Messdaten an eine mit der Messstation 2 verbundenen Rechen- und Steuereinheit 4.. weitergeleitet. In der Belichtungsstation 3, welche gleichfalls mit der Rechen- und Steuereinheit verbunden ist, werden die Kopiervorlagen V sodann gemäss den Messwerten auf lichtempfindliches Kopiermaterial M, beispielsweise Fotopapier, belichtet, um fotografische Kopien P zu erzeugen. Eine Druckeinheit 8, die gleichfalls in der Belichtungsstation 3 angeordnet ist, erlaubt es, weitere Informationen beispielsweise auf die Rückseite des Fotopapiers M zu drucken oder sonstwie aufzubringen. Eine derartige Vorrichtung ist beispielsweise in der EP-A-0,293,887 beschrieben. Die Unterschiede der Vorrichtung zur Durchführung des erfindungsgemässen Verfahrens liegen im Aufbau der Messstation 2 und werden im folgenden im Zusammenhang mit der Beschreibung des erfindungsgemässen Verfahrens näher erläutert.

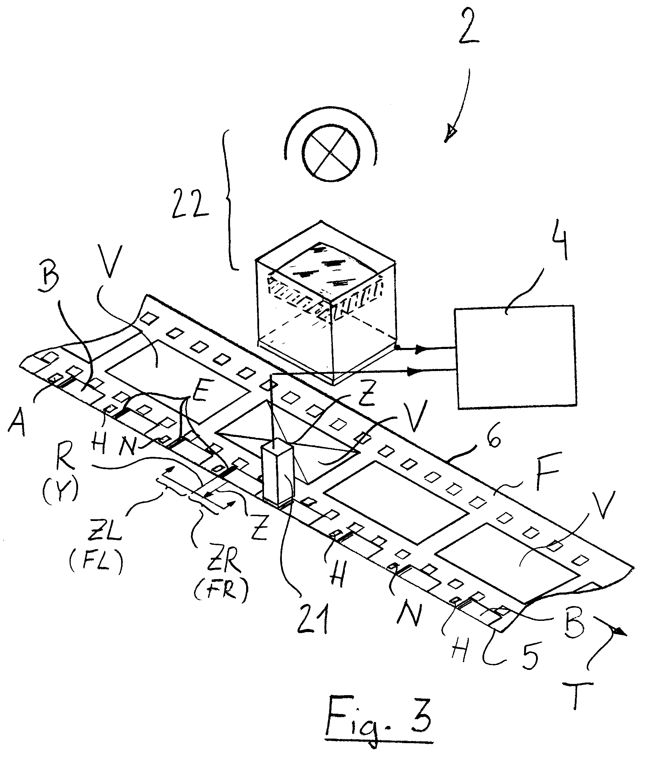

Belichtetes und entwickeltes fotografisches Vorlagenmaterial F, insbesondere solches des 135-er Formates, kann je nach Aufnahmeverfahren vollformatige oder halbformatige Kopiervorlagen V, üblicherweise Farbnegativbilder, enthalten. In Fig. 3 ist schematisch ein Abschnitt eines belichteten und entwickelten Negativfilms F, der vollformatige Kopiervorlagen V enthält, in der Messstation 2 dargestellt. Dabei beschränkt sich die Darstellung aus Übersichtlichkeitsgründen auf das für das Verständnis des erfindungsgemässen Verfahrens unbedingt erforderliche. Der Negativfilmstreifen ist gesamthaft mit F bezeichnet. Die vollformatigen Negativbilder sind mit dem Bezugszeichen V versehen. Oberhalb des Negativfilmstreifens F ist eine Messanordnung 22 angedeutet, die mit der Rechen- und Steuereinheit 4 verbunden ist. Mit Hilfe dieser Messanordnung 22 werden die Negativbilder V bezüglich ihres farblichen und dichtemässigen Eindruckes analysiert und die Messdaten an die Rechen- und Steuereinheit weitergeleitet. Dort werden für jedes Negativbild aus den Messdaten die erforderlichen Kopierlichtmengen für die drei Grundfarben Rot, Grün und Blau bestimmt. Mit Hilfe der Messanordnung wird auch die örtliche Lage des Zentrums Z eines Negativbildes auf dem Film bestimmt. Dies erfolgt durch einen Steg-Detektionsalgorithmus, wie er in den heute erhältlichen fotografischen Kopiergeräten üblich ist.

Im Bereich der unteren Längskante 5 des Filmes F ist vorzugsweise oberhalb der Transportbahn T des Filmes F ein Strichcode-Detektor 21 angeordnet, der mit der Rechen- und und Steuereinheit 4 verbunden ist. Der Strichcode-Detektor 21 ist derart oberhalb des Filmes angeordnet, dass er in der Lage ist, die während des Transportes des Filmes F durch die Messstation 2 vorbeitransportierten erweiterten DX Codes B zu lesen. Insbesondere detektiert der Strichcode-Detektor 21 auch die Eingangssequenz E des erweiterten DX Codes und gibt dessen Lage auf dem Film F als Bezugspunkt R an die Rechen- und Steuereinheit weiter. Mit Hilfe der Rechen- und Steuereinheit 4 werden ausgehend vom Ort des Auftretens der Eingangssequenz E als Bezugspunkt R auf dem Film F in und entgegen der Transportrichtung T des Filmes F zwei Zuordnungsbereiche definierter Länge festgelegt.

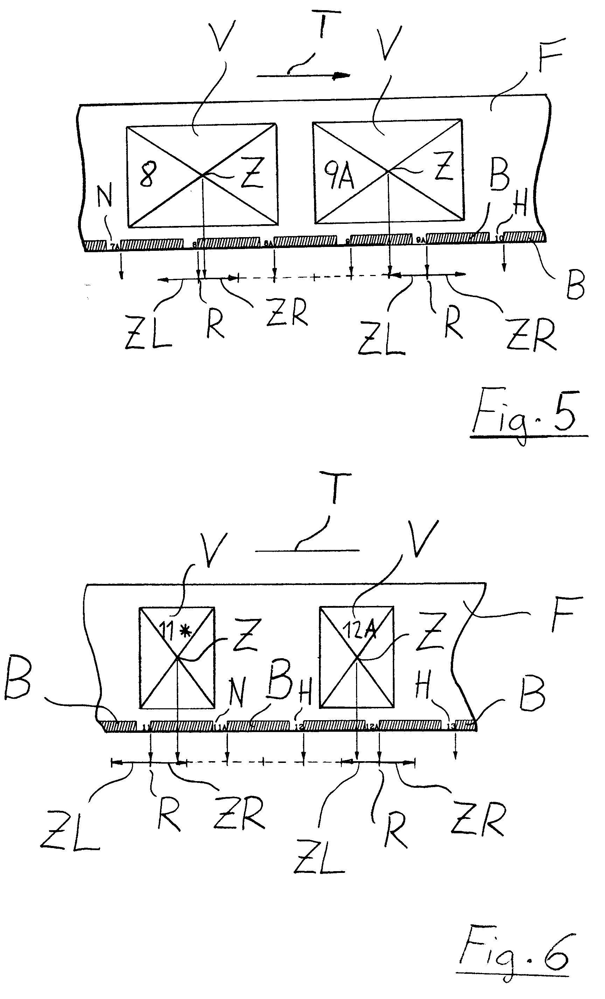

Das Diagramm in Fig. 5 erläutert diesen Vorgang für den Erstdurchlauf von vollformatigen Negativbildern näher. Bei Transport des Filmes F von links nach recht, wie beispielsweise dargestellt, erstreckt sich ein linker Zuordnungsbereich ZR ausgehend vom Bezugspunkt R entgegen der Transportrichtung T nach links während sich ein rechter Zuordnungsbereich ZR in Transportrichtung nach rechts erstreckt. Sodann wird untersucht, ob die örtliche Lage des Zentrums Z des aktuellen Negativbildes N in einen dieser beiden Zuordnungsbereiche ZL und ZR fällt. Trifft dies zu, so wird dem jeweiligen Negativbild V die in dem erweiterten DX Code B enthaltene Nummer K, dessen Eingangssequenz E den Bezugspunkt R lieferte, zugeordnet. Fällt das Zentrum Z nicht in einen der beiden definierten Zuordnungsbereiche ZL bzw. ZR, so wird der Vorgang mit dem nächsten erweiterten DX Code B wiederholt, und untersucht, ob das Zentrum des aktuellen Negativbildes in einen der beiden für diesen erweiterten DX Code B definierten Zuordnungsbereiche fällt. Dabei kann die zugeordnete Nummer K eine Hauptnummer H oder eine Nebennummer N sein. Gemäss der Darstellung in Fig. 5 wird dem rechten Negativbild V die Nummer 9A zugeordnet, welche eine Nebennummer N ist. Das Zentrum Z des Bildes links davon fällt weder in die Zuordnungsbereiche des erweiterten DX Codes B der die Nummer 9 enthält noch in diejenigen des erweiterten DX Codes B mit der Nummer 8A. Das Zentrum Z dieses Negativbildes V fällt aber in den rechten Zuordnungsbereich ZR des erweiterten DX Codes B mit der Nummer 8. Entsprechend wird dem Negativbild die Hauptnummer 8 zugeordnet.

Vorzugsweise werden die beiden Zuordnungsbereiche ZL und ZR gleich lang gewählt. Besonders zweckmässig ist es, wenn die Länge der Zuordnungsbereiche ZL bzw. ZR zu DXP/2 + a gewählt wird. Dabei steht DXP für den Abstand benachbarter erweiterter DX Codes B und a von etwa 0,1 mm bis etwa 2 mm, vorzugsweise etwa 0,5 mm beträgt. Die Grösse a trägt dabei den möglichen Ungenauigkeiten in der Positionsdetektion der Eingangssequenz E des erweiterten DX Codes B sowie der Bestimmung der örtlichen Lage des Zentrums des Negativbildes V beim Erstdurchlauf des Filmes F Rechnung.

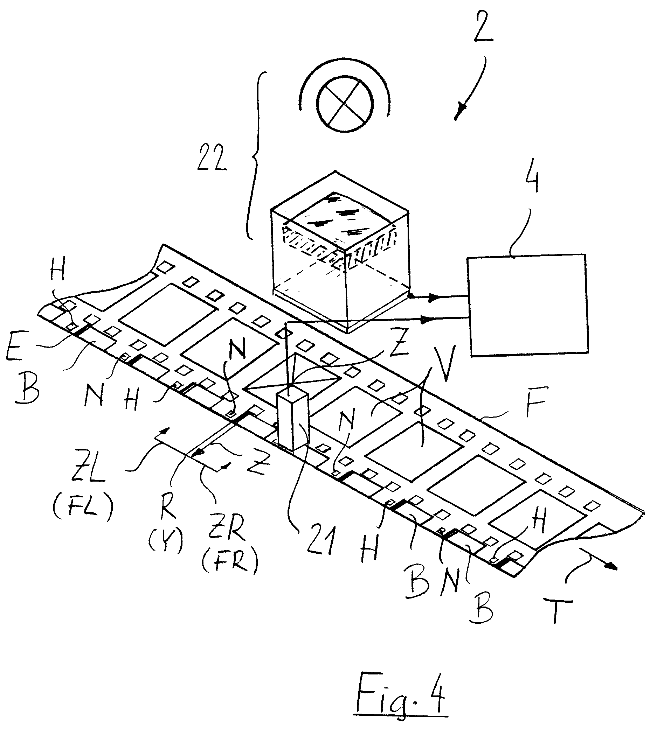

In Fig. 4 ist ein Negativfilm F mit halbformatigen Negativbildern V in der Belichtungsstation 2 dargestellt. Die Zuordnung der in den erweiterten DX Codes B enthaltenen codierten Nummern K erfolgt prinzipiell analog zu der zuvor geschilderten Zuordnung bei vollformatigen Negativvorlagen V. Zusätzlich dazu wird jedoch auch noch untersucht, ob das Zentrum Z des halbformatigen Negativbildes V in den linken oder in den rechten Zuordnungsbereich ZL bzw. ZR fällt und diese Information festgehalten. Um zwei halbformatige Negativbilder zu unterscheiden, bei denen bezogen auf denselben Bezugspunkt das Zentrum des einen Negativbildes in den linken Zuordnungsbereich ZL fällt und das Zentrum des zweiten in den rechten Zuordnungsbereich ZR fällt und die demnach dieselbe Nummer zugeordnet erhielten, wird beispielsweise dem halbformatigen Negativbild, dessen Zentrum im rechten Zuordnungsbereich ZR aufgefunden wird zusätzlich zu der detektierten Nummer ein Sonderzeichen, beispielsweise ein Sternchen oder ähnliches, zugeordnet

In Fig. 6 ist ist das Verfahren für den Erstdurchlauf von halbformatigen Kopiervorlagen anhand des Diagramms näher erläutert. Aus Gründen der Übersichtlichkeit wurde, wie auch in Fig. 5, auf die Darstellung der Perforationslöcher 7 im Film F verzichtet. Das Zentrum des rechten halbformatigen Negativbildes fällt in den linken Zuordnungsbereich ZL des erweiterten DX Codes B mit der Nummer 12A und erhält entsprechend diese Negativnummer zugeordnet. Das Zentrum des links darauf folgenden halbformatigen Negativbildes fällt erst in den rechten Zuordnungsbereich des erweiterten DX Codes B mit der Nummer 11. Vereinbarungsgemäss wird diesem Negativbild zusätzlich zu der Nummer 11 ein Sonderzeichen, in diesem Fall ein Sternchen zugeordnet.

Im Gegensatz zu dem in der EP-A-0,293,887 beschriebenen Verfahren ist bei dem erfindungsgemässen Verfahren in der Messstation 2 nur ein einziger Strichcode-Detektor 21 erforderlich, welcher sowohl die in konventionellen DX Codes enthaltenen Informationen E, L, M und X alsauch die codierte Negativnummer K detektieren kann.

Mit Hilfe des beschriebenen Zuordnungsverfahrens in der Messstation 2 können alle auf dem Film F vorhandenen Negativbilder V unterschiedlich gekennzeichnet werden und ihre Lage auf dem Film F, unabhängig davon, ob es sich um voll- oder um halbformatige Bilder handelt, eindeutig festgelegt werden. Diese Informationen werden in der Rechen- und Steuereinheit 4 für die weitere Bearbeitung des Negativfilmes aufbewahrt. In der Belichtungsstation 3 wird jedes auf dem Film befindliche voll- oder halbformatige Negativbild sodann repositioniert und gemäss den ermittelten Belichtungsdaten auf lichtempfindliches Fotopapier M belichtet um erstmals Positivbilder von den Negativbildern V zu erstellen. Die in der Rechen- und Steuereinheit 4 zu jedem Negativbild V aufbewahrte Nummer wird an die vorzugsweise unterhalb der Transportbahn des Fotopapiers M angeordnete Druckeinheit weitergegeben und vorzugsweise auf die Rückseite der Bilder aufgedruckt. Es versteht sich, dass anstelle der Druckeinheit auch eine anders geartete Vorrichtung vorgesehen sein kann, welche es beispielsweise erlaubt, die zugehörige Negativnummer im Randbereich des Bildes auf die Vorderseite aufzubelichten.

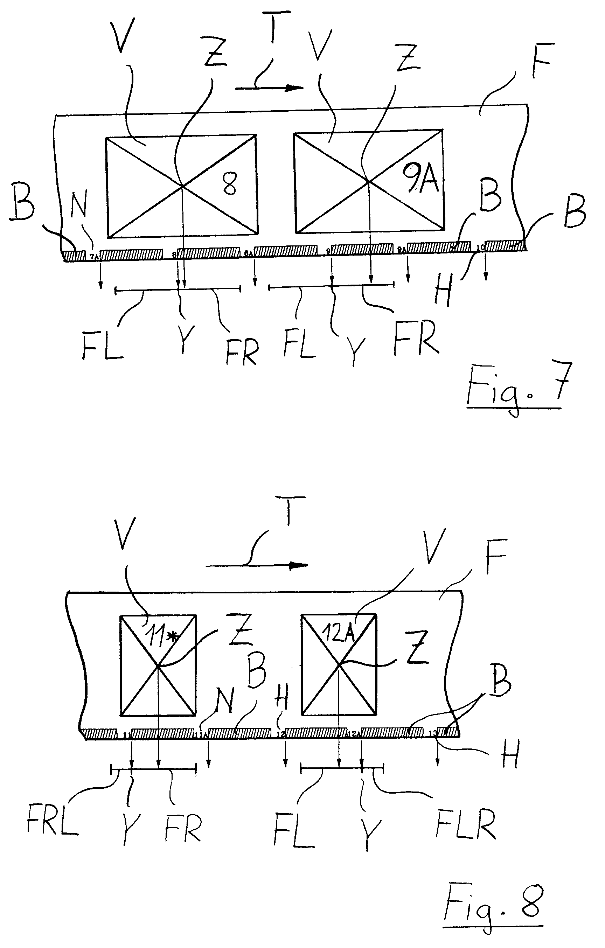

In den Fig. 7 und 8 ist die Vorgangsweise für Nachbestellungsaufträge von Bildern von vollformatigen (Fig. 7) und von halbformatigen (Fig. 8) schematisch dargestellt. Will der Kunde Bilder nachbestellen, so ist alles was er zu tun hat, die Nummer von den vorhandenen Bildern, von denen er weitere Abzüge bestellen will, abzulesen und dem Fotolabor bei der Abgabe der Negativfilmstreifen mitzuteilen. Im Fotolabor werden die vom Kunden angegebenen Nummern beispielsweise über eine Tastatur in die Rechen- und Steuereinheit 4 des fotografischen Kopiergerätes 1 eingegeben. Beim Durchlauf des Filmstreifens, welcher üblicherweise mit einer Reihe anderer zu einer langen Filmrolle zusammengeklebt, zusammengespleisst oder andersartig verbunden ist, erkennt der Steg-Detektionsalgorithmus, ob es sich um eine Nachbestellung von voll- oder von halbformatigen Negativbildern V handelt. Dabei ist es nicht unbedingt erforderlich, dass entweder nur vollformatige oder nur halbformatige Filmstreifen miteinander verbunden werden, die beiden Formate können auch gemischt auftreten.

Die Vorgangsweise für vollformatige Negativbilder V ist in Fig. 7 dargestellt. In der Messstation wird jedes Negativbild bezüglich seiner farblichen und dichtemässigen Charakteristik analysiert und die Messdaten an die Rechen- und Steuereinheit 4 weitergeleitet, in der daraus die erforderlichen Kopierlichtmengen bestimmt werden. Mit Hilfe des Steg-Detektionsalgorithmus wird in bekannter Weise die Lage des Zentrums Z jedes Negativbildes V auf dem Film bestimmt. Mit Hilfe des Strichcode-Detektors 21 werden die erweiterten DX Codes B gelesen und insbesondere auch das Auftreten der Eingangssequenz E jedes erweiterten DX Codes detektiert. Der Ort des Auftretens jeder Eingangssequenz E auf dem Film F wird als Bezugspunkt Y definiert. Sodann wird in Analogie zum Vorgehen beim Erstdurchlauf des Films ausgehend vom Bezugspunkt Y in und entgegen der Transportrichtung T des Negativfilmes F jeweils ein Fangbereich definierter Länge auf dem Film festgelegt. Bei Transport des Filmes von links nach rechts wird der Fangbereich, der sich ausgehend vom Bezugspunkt Y entgegen der Transportrichtung T erstreckt, als linker Fangbereich FL bezeichnet und entsprechend der Fangbereich, der sich ausgehend vom Bezugspunkt in Transportrichtung erstreckt, als rechter Fangbereich bezeichnet. Daraufhin wird untersucht, ob der festgestellte Ort des Zentrums Z des Negativbildes V im linken oder im rechten Fangbereich FL bzw. FR festgestellt wird. Zutreffendenfalls wird das Negativbild V als zu der aktuellen im erweiterten DX Code B gelesenen Nummer K gehörig angesehen, andernfalls die Untersuchung mit dem beim Weitertransport des Filmes F in Transportrichtung T folgenden nächsten erweiterten DX Code B wiederholt.

Bei vollformatigen Negativbildern V werden der rechte und der linke Fangbereich FR und FL, wie dargestellt, vorzugsweise gleich lang gewählt. Besonders zweckmässig ist es in diesem Fall, die Länge der Fangbereiche derart zu wählen, dass sie der Länge der Zuordnungsbereiche vermehrt um eine Toleranzlänge b entspricht. Die Toleranzlänge b kann dabei von etwa 0,4 mm bis etwa 4,0 mm, vorzugsweise etwa 3,0 mm betragen. Mit der Toleranzlänge b wird den möglichen Ungenauigkeiten bei der Detektion des Auftretens der Eingangssequenz E des erweiterten DX Codes sowie den möglichen Ungenauigkeiten bei der Detektion des Zentrums Z des Negativbildes V Rechnung getragen. Die Toleranzlänge wird gegenüber dem Erstdurchlauf des Filmes F grösser gewählt, da bei der Bearbeitung von Nachbestellungen sowohl die möglichen Fehlerquellen des Erstdurchganges des Filmes als auch die zuvor angeführten möglichen Detektionsfehler bei der Abarbeitung des Nachbestellungsauftrages zu berücksichtigen sind. Wegen der gewählten Toleranzlängen können der rechte und der linke Fangbereich benachbarter erweiterter DX Codes überlappen, sodass es sogar vorkommen kann, dass ein Bild sowohl die Bedingung für die Zuordnung der einen als auch der anderen Nummer erfüllt. In diesem Fall werden beide Möglichkeiten in der Rechen- und Steuereinheit festgehalten. Bei der späteren Belichtung wird diejenige Möglichkeit ausgewählt, die mit der vom Kunden angegebenen Nummer übereinstimmt.

Bei halbformatigen Negativbildern V ist die Vorgangsweise leicht abweichend von der bei vollformatigen, da in diesem Fall Negativbilder V auftreten können, welche dieselbe Negativnummer tragen, einzig unterschieden durch ein Sonderzeichen. Diese Verfahrensvariante ist in Fig. 8 dargestellt und unterscheidet sich von der Verfahrensvariante für vollformatige Negativbilder V insbesondere dadurch, dass nunmehr unterschieden werden muss, ob das Zentrum Z eines Negativbildes V beim Erstdurchlauf im linken oder im rechten Zuordnungsbereich ZL bzw. ZR aufgefunden wurde. Als unterscheidendes Merkmal dient dabei das Sonderzeichen, dass dem jeweiligen Negativbild im einen oder im anderen Fall zusätzlich zu der entsprechenden Nummer zugeordnet wurde. Diese Information wird einfach durch Angabe der entsprechenden Nummer mit Sonderzeichen zusammen mit der der Information über die Anzahl der jeweils gewünschten Kopien beispielsweise über eine Tastatur in die Rechen- und Steuereinheit 4 eingegeben. Bei einem Negativbild V, dessen Zentrum Z in der Messstation 2 im linken Zuordnungsbereich aufgefunden wurde und welchem vereinbarungsgemäss kein Sonderzeichen zugeordnet wurde, wird die Länge des linken Fangbereiches FL als die Länge des linken Zuordnungsbereiches ZL vermehrt um die Toleranzlänge b, welche dabei von etwa 0,4 mm bis etwa 4,0 mm, vorzugsweise etwa 3,0 mm betragen kann und den möglichen Ungenauigkeiten bei der Detektion des Auftretens der Eingangssequenz E des erweiterten DX Codes sowie den möglichen Ungenauigkeiten bei der Detektion des Zentrums Z des Negativbildes V beim Erstdurchlauf des Filmes und bei der Abarbeitung des Nachbestellungsauftrages Rechnung trägt. Die Länge des zugeordneten Fangbereiches FLR rechts des Bezugspunktes Y wird entsprechen der Toleranzlänge b gewählt. Halbformatige Negativbilder V, deren Zentrum in der Messstation im rechten Zuordnungsbereich ZR aufgefunden wurde, sind zur Unterscheidung von dem Negativbild, dessen Zentrum im linken Zuordnungsbereich lag, vereinbarungsgemäss durch ein Sonderzeichen, beispielsweise durch ein Sternchen markiert. Für diese Negativbilder V wird der rechte Fangbereich FR entsprechend der Länge des rechten Zuordnungsbereiches ZR vermehrt um die Toleranzlänge b gewählt. Der zugehörigen linke Fangbereich FRL links des Bezugspunktes Y wird entsprechend der Toleranzlänge b gewählt.

Schliesslich werden diejenigen Negativbilder, die der Kunde in Auftrag gegeben hat, und deren Nummer der Rechen- und Steuereinheit mitgeteilt wurden, ausgewählt, und die entsprechenden voll- oder halbformatigen Negativbilder V gemäss den zu der jeweiligen Negativnummer gehörigen Belichtungsdaten auf lichtempfindliches Fotopapier M belichtet. Auf diese weise wird von den gewünschten Negativen die bestellte Anzahl von Abzügen gemacht. Die zum jeweiligen Negativbild V gehörige Negativnummer wird mit Hilfe der Druckeinheit 8, die vorzugsweise unterhalb des Fotopapiers M angeordnet ist, vorzugsweise auf die Rückseite des zugehörigen Fotos P aufgedruckt oder auf ähnliche Weise aufgebracht.

Das erfindungsgemässe Verfahren erlaubt eine eindeutige Zuordnung von bereits auf dem Negativfilm vorgesehenen Nummern zu den darauf erstellten Negativbildern. Obwohl diese Zuordnung für den Betrachter nicht immer eindeutig ist und es für ihn oft sehr schwer ist, zu entscheiden, welche Nummer zu welchem Negativbild gehört, erlaubt es das erfindungsgemässe Verfahren dies sowohl bei vollformatigen als auch bei halbformatigen Negativbildern einfach und schnell durchzuführen. Selbst bei fehlerhaft erstellten Negativbildern, die aufgrund eines Fehlers des Transportmechanismus der Kamera überschneiden können, ist eine eindeutige Zuordnung gewährleistet. Als einzige Randbedingung gilt für vollformatige Negativbilder, dass der Abstand der Zentren zweier aufeinanderfolgender Negativbilder 34 mm nicht unterschreiten darf. Für halbformatige Negativbilder gilt entsprechend ein Mindestabstand von 17 mm. Werden diese Abstände unterschritten, so werden diese Negativbilder bei der Abarbeitung ignoriert, und der Vorgang wird mit dem jeweils nächsten Bild fortgesetzt. Für die Detektion der jeweiligen Negativnummer ist in der Messstation nur ein einziger Strichcode-Detektor erforderlich. Aufwendige Lochstreifenstanzer oder ähnliches können entfallen.

Die Nachbestellung von Bildern ist für den Kunden deutlich vereinfacht. Er muss nicht mehr versuchen, die richtige Negativnummer auf den Negativfilmstreifen zu erraten, sondern er kann die jeweilige Nummer einfach beispielsweise von der Rückseite des Bildes, welches er nachbestellen will, ablesen. Aber selbst bei Nummernangaben, die der Kunde von den Negativfilmstreifen abgelesen hat, ist im allgemeinen eine sichere Abarbeitung des Kundenauftrages möglich. Darüber hinaus besteht auch keine Gefahr mehr, dass seine Angaben im Fotolabor falsch interpretiert werden. Die Zuordnung der Negativnummer zu den erstellten Bildern erfolgt jedesmal nach demselben Verfahren, sodass immer garantiert ist, dass der Kunde die Bilder gemäss seiner Bestellung erhält.

## Patentansprüche

1. Verfahren zur Erstellung fotografischer Kopien von fotografischen Kopiervorlagen in einem fotografischen Kopiergerät, bei dem zunächst in einer Messstation des fotografischen Kopiergerätes ein belichtetes fotografisches Vorlagenmaterial, auf welches fotografische Kopiervorlagen aufbelichtet sind, Vorlage für Vorlage analysiert wird und dabei für die Belichtung jeder Vorlage erforderliche Messdaten bestimmt werden, jeder Vorlage eine Nummer eindeutig zugeordnet wird, welche Nummer durch das Detektieren eines im Randbereich des Vorlagenmaterials in periodischen Abständen vorgesehenen Strichcodes festgestellt wird, und die den Kopiervorlagen zugeordneten Nummern und die jeweils zugehörigen Messdaten an eine Rechen- und Steuereinheit weitergeleitet werden; bei dem sodann in einer Belichtungsstation, die in Transportrichtung des Vorlagenmaterials nach der Messstation angeordnet ist, jede Kopiervorlage gemäss den in der Rechen- und Steuereinheit vorliegenden, zu der jeweiligen Kopiervorlagennummer gehörigen Messdaten zur Erstellung der fotografischen Kopien auf fotografisches Kopiermaterial aufbelichtet wird sowie die jeder Kopiervorlage zugeordnete Nummer auf die fotografische Kopie aufgebracht wird, dadurch gekennzeichnet, dass ein Vorlagenmaterial verarbeitet wird, welches einen erweiterten DX Code aufweist, und dass die codierten Nummern beim Lesen der erweiterten DX Codes detektiert werden und dass dazu in der Messstation nur ein Strichcode-Detektor eingesetzt wird.

2. Verfahren nach Anspruch 1, dadurch gekennzeichnet, dass zur Zuordnung der in einem erweiterten DX Code detektierten Nummern zu einer bestimmten Vorlage in der Messstation mit Hilfe des Strichcode-Detektors das Auftreten einer normierten Eingangssequenz des erweiterten DX Codes registriert wird, dass der Ort des Auftretens der Eingangssequenz auf dem Vorlagenmaterial als Bezugspunkt gewählt wird, dass vom Bezugspunkt aus gesehen in und entgegen der Transportrichtung des Vorlagenmaterials jeweils ein Zuordnungsbereich definierter Länge festgelegt wird, beispielsweise bei Transport des Vorlagenmaterials von links nach rechts ein linker und ein rechter Zuordnungsbereich, dass die örtliche Lage des Zentrums der aktuellen Kopiervorlage auf dem Vorlagenmaterial bestimmt wird, dass sodann untersucht wird, ob der festgestellte Ort des Zentrums der Kopiervorlage innerhalb der links und rechts des Bezugspunktes festgelegten Zuordnungsbereiche liegt, und dass zutreffendenfalls der aktuellen Kopiervorlage die im DX Code enthaltene Nummer, andernfalls der Zuordnungsvorgang mit dem nächsten in Transportrichtung des Vorlagenmaterials folgenden erweiterten DX Code wiederholt wird.

3. Verfahren nach Anspruch 2, dadurch gekennzeichnet, dass die Zuordnungsbereiche in und entgegen der Transportrichtung des Vorlagenmaterials gleich lang gewählt werden.

4. Verfahren nach Anspruch 3, dadurch gekennzeichnet, dass die Länge der Zuordnungsbereiche zu DXP/2 + a gewählt wird, wobei DXP für den Abstand benachbarter erweiterter DX Codes steht und a von etwa 0,1 mm bis etwa 2 mm, vorzugsweise etwa 0,5 mm beträgt.

5. Verfahren nach einem der vorangehenden Ansprüche, dadurch gekennzeichnet, dass bei halbformatigen Kopiervorlagen zusätzlich festgehalten wird, ob das Kopiervorlagenzentrum im Zuordnungsbereich links oder rechts des Bezugspunktes gefunden wurde und dass halbformatigen Kopiervorlagen, deren Zentrum beispielsweise im rechten Zuordnungsbereich aufgefunden wurde, zu der detektierten Nummer ein Sonderzeichen, beispielsweise ein Stern oder ähnliches zugeordnet wird.

6. Verfahren nach einem der vorangehenden Ansprüche, dadurch gekennzeichnet, dass bei Nachbestellungen von fotografischen Kopien die im Rahmen des Nachbestellungsauftrages von einem Kunden angegebenen, beispielsweise von der Rückseite von bereits vorhandenen Kopien abgelesenen Nummern und die Anzahl der gewünschten Kopien der Rechen- und Steuereinheit mitgeteilt werden, dass die vom Kunden angegebenen Nummern mit den in der Messstation den Negativvorlagen zugeordneten Nummern verglichen werden, und dass in der Belichtungsstation von denjenigen Kopiervorlagen, deren Nummern mit den angegebenen übereinstimmen, die gewünschte Anzahl Kopien erstellt werden.

7. Verfahren nach Anspruch 6, dadurch gekennzeichnet, dass das Format der Kopiervorlagen in der Messstation detektiert wird, und dass bei Vorliegen von vollformatigen Kopiervorlagen die Länge des rechten und des linken Fangbereiches als die Länge der Zuordnungsbereiche vermehrt um eine Toleranzlänge b, welche von etwa 0,4 mm bis etwa 4,0 mm, vorzugsweise etwa 3,0 mm betragen kann, definiert wird.

8. Verfahren nach Anspruch 6, dadurch gekennzeichnet, dass das Format der Kopiervorlagen in der Messstation detektiert wird, und dass bei Vorliegen von halbformatigen Kopiervorlagen, deren Zentrum beim Erstdurchlauf innerhalb des linken Zuordnungsbereiches aufgefunden wurde, die Länge des linken Fangbereich entsprechend der Länge des linken Zuordnungsbereiches vermehrt um eine Toleranzlänge b, welche von etwa 0,4 mm bis etwa 4,0 mm, vorzugsweise etwa 3,0 mm betragen kann, definiert wird, während die Länge des zugeordneten Fangbereiches rechts des Bezugspunktes der Toleranzlänge b entsprechend gewählt wird, und dass bei halbformatigen Kopiervorlagen, deren Zentrum in der Messstation innerhalb des rechten Zuordnungsbereiches aufgefunden wurden und welchen beispielsweise dementsprechend zu der detektierten Nummer ein Sonderzeichen zugeordnet wurde, die Länge des rechten Fangbereich entsprechend der Länge des rechten Zuordnungsbereiches vermehrt um eine Toleranzlänge b, welche von etwa 0,4 mm bis etwa 4,0 mm, vorzugsweise etwa 3,0 mm betragen kann, definiert wird während die Länge des zugeordneten Fangbereiches links des Bezugspunktes der Toleranzlänge b entsprechend gewählt wird.

9. Verfahren nach einem der vorangehenden Ansprüche, dadurch gekennzeichnet, dass die den Kopiervorlagen zugeordneten Nummern vorzugsweise auf die Rückseite der zugehörigen fotografischen Kopien aufgedruckt werden.
